# EUROPÄISCHE PATENTSCHRIFT

(11) **EP 3 304 018 B1**
(45) Veröffentlichungstag und Bekanntmachung des Hinweises auf die Patenterteilung: **06.05.2020**
(21) Anmeldenummer: 16727155.0
(22) Anmeldetag: 27.05.2016
(51) Int. Cl.: G01L 5/16, G01L 1/16, G01L 3/10, G01L 3/14

(54) **KOMPONENTENAUFNEHMER UND MEHRKOMPONENTENAUFNEHMER UNTER VERWENDUNG EINES SOLCHEN KOMPONENTENAUFNEHMERS SOWIE ANWENDUNG EINES SOLCHEN MEHRKOMPONENTENAUFNEHMERS**
FORCE COMPONENTS RECEIVER AND MULTIPLE FORCE COMPONENTS RECEIVER AS WELL AS THE USE OF SUCH MULTIPLE FORCE COMPONENT RECEIVER
CAPTEUR DE COMPOSANTES DES FORCES ET CAPTEUR DES COMPOSANTES DE FORCES MULTIPLES ET L'UTILISATION D'UN TEL CAPTEUR DES COMPOSANTES DE FORCES MULTIPLES

(30) Priorität: 05.06.2015 CH 8052015
(43) Veröffentlichungstag der Anmeldung: 11.04.2018
(73) Patentinhaber: Kistler Holding AG, 8408 Winterthur (CH)
(72) Erfinder: FUERER, Daniel, 8046 Zürich (CH); KOHLER, Denis, 8413 Neftenbach (CH); CAVALLONI, Claudio, 8105 Regensdorf (CH)
(86) Internationale Anmeldenummer: PCT/EP2016/062040
(87) Internationale Veröffentlichungsnummer: WO 2016/193158

(56) Entgegenhaltungen:
- EP-A1- 0 594 534
- WO-A2-2007/143870

## Beschreibung

### Technisches Gebiet

Die Erfindung betrifft einen Komponentenaufnehmer auf Basis von piezoelektrischem Kristallmaterial zur Aufnahme einer Momentenkomponente. Die Erfindung betrifft auch einen Mehrkomponentenaufnehmer zur Aufnahme von mehreren Komponenten von Kräften und Momenten unter Verwendung eines solchen Komponentenaufnehmers. Die Erfindung betrifft auch eine Anwendung eines solchen Mehrkomponentenaufnehmers.

### Stand der Technik

Druck- oder Kraftaufnehmer werden in vielerlei Anwendungen eingesetzt. Oft sind solche Aufnehmer verschiedenen Kräften und Momenten ausgesetzt. Beispiele sind Messungen von Zerspankräften bei Herstellverfahren, insbesondere beim Fräsen, Hobeln und dergleichen, bei denen eine translatorische Bewegung unter Kraftaufwendung durchgeführt wird. Je nach Anwendung werden gleichzeitig mehrere Komponenten von Kräften und Momenten in einem kartesischen Koordinatensystem mit drei Koordinatenachsen X, Y und Z aufgenommen.

Bekannte Druck- oder Kraftaufnehmer arbeiten auf Basis von piezoelektrischem Kristallmaterial oder Dehnungsmessstreifen (DMS). Beim piezoelektrischen Kristallmaterial sind Fühlelement und Aufnehmerelement in einem vereint, während das DMS nur ein Fühlelement ist und solches mit einem separaten Aufnehmerelement zu einem DMS-System verbunden werden muss. Funktionell gibt es grosse Unterschiede. So sind Steifigkeit und somit Messgenauigkeit, Eigenfrequenz, Überlastbarkeit des piezoelektrischen Kristallmaterials typischerweise um eine Grössenordnung höher als beim DMS-System. Auch ist das Baumass eines Aufnehmers mit piezoelektrischem Kristallmaterial um einen Faktor 30 kleiner als ein vergleichbarer Aufnehmer mit einem DMS-System. Und schliesslich ist der dynamische Messbereich des piezoelektrischen Kristallmaterials wesentlich grösser, so dass ein einzelner Aufnehmer mit piezoelektrischem Kristallmaterial den dynamischen Messbereich von mehreren Aufnehmern mit DMS-Systemen abdeckt. Aus diesen Gründen richtet sich die Erfindung auf Mehrkomponentenaufnehmer auf Basis von piezoelektrischem Kristallmaterial.

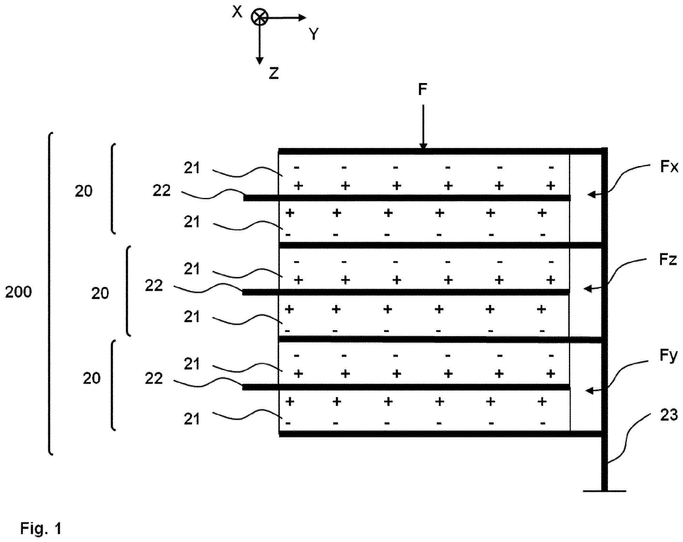

Die Schrift CH472668A offenbart einen Dreikomponentenaufnehmer auf Basis von piezoelektrischem Kristallmaterial zur gleichzeitigen Aufnahme von drei Kraftkomponenten. Der konstruktive Aufbau dieses Dreikomponentenaufnehmers ist in Fig. 1 der vorliegenden Erfindung im Detail dargestellt. Eine mit einem Pfeil dargestellte Kraft F wird von scheibenförmigen Elementen 21 aus piezoelektrischem Kristallmaterial aufgenommen. Die von der Kraft F auf Elementflächen der Elemente 21 erzeugten negativen elektrischen Polarisationsladungen sind mit - bezeichnet, die von der Kraft F auf Elementflächen der Elemente 21 erzeugten positiven elektrischen Polarisationsladungen sind mit + bezeichnet. Der Komponentenaufnehmer 20 weist Abnehmerelektroden 22 zur Abnahme der positiven elektrischen Polarisationsladungen auf und er weist Elektroden 23 zur Abnahme der negativen elektrischen Polarisationsladungen auf. Die Abnehmerelektrode 22 liefert ein Ausgangssignal, das proportional zur Grösse der aufgenommenen Kraftkomponente ist. Die Elektrode 23 ist geerdet. Drei Komponentenaufnehmer 20 mit jeweils zwei Elementen 21 sind entlang der Z-Koordinatenachse übereinander gestapelt und bilden eine Gruppe 200 und nehmen drei Kraftkomponenten Fx, Fy und Fz gleichzeitig und direkt auf.

Nun besteht in der Automatisationstechnik und insbesondere in der Robotik bei humanoiden Robotern oder als Handwurzelsensor ein langgehegtes Bedürfnis nach der Erfassung von Kräften und Momenten in allen drei kartesischen Koordinaten.

Dazu offenbart die Schrift CH502590A einen Sechskomponentenaufnehmer zur Erfassung von mehreren Komponenten von Kräften und Momenten. Vier identische Dreikomponentenaufnehmer auf Basis von piezoelektrischem Kristallmaterial sind in einer X-Y-Ebene in einem Rechteck beabstandet zueinander angeordnet. Die vier Dreikomponentenaufnehmer haben einen konstruktiven Aufbau, wie aus der Schrift CH472668A bekannt. Die Seitenlängen des Rechtecks sind um ein Vielfaches grösser als die Durchmesser der Dreikomponentenaufnehmer. Somit werden drei Kraftkomponenten von den Dreikomponentenaufnehmern gleichzeitig und direkt aufgenommen und drei weitere Momentenkomponenten werden daraufhin über Vektorrechnung aus den aufgenommenen Kraftkomponenten und den gegenseitigen Abständen der Dreikomponentenaufnehmer rechnerisch ermittelt.

Eine erste Aufgabe der vorliegenden Erfindung ist es, einen Komponentenaufnehmer auf Basis von piezoelektrischem Kristallmaterial zur Aufnahme einer Momentenkomponente bereitzustellen. Eine weitere Aufgabe der Erfindung ist es, einen Mehrkomponentenaufnehmer zur Aufnahme von mehreren Komponenten von Kräften und Momenten unter Verwendung eines solchen Komponentenaufnehmers, der möglichst geringe Baumasse benötigt. Der Komponentenaufnehmer und der Mehrkomponentenaufnehmer sollen zudem konstruktiv robust aufgebaut und kostengünstig herstellbar sein. Das Patentdokument WO 2007/143870 A2 offenbart einen Querkraftaufnehmer und das Patentdokument EP0594534 A1 offenbart einen Mehrkomponentenaufnehmer.

### Darstellung der Erfindung

Zumindest eine dieser Aufgaben wird durch die Merkmale des unabhängigen Anspruchs gelöst.

Die Erfindung betrifft einen Komponentenaufnehmer zur Aufnahme einer Momentenkomponente; wobei ein Element aus piezoelektrischem Kristallmaterial Elementflächen hat; wobei eine Kraftkomponente elektrische Polarisationsladungen auf den Elementflächen erzeugt; und wobei die aufzunehmende Momentenkomponente aus mindestens einem Paar mit Kraftkomponenten besteht, welche Kraftkomponenten eines Paares eine gleiche Wirkachse und entgegengesetzte Wirkrichtungen haben. Der Komponentenaufnehmer nimmt die Kraftkomponenten eines Paares getrennt auf.

Es hat sich überraschenderweise herausgestellt, dass sich mit einem Element aus piezoelektrischem Kristallmaterial eine Momentenkomponente direkt aufnehmen lässt, wenn die Kraftkomponenten eines Paares getrennt aufgenommen werden. Dazu kann das Element aus mehreren Elementsegmenten bestehen, so dass jedes Elementsegment eine der Kraftkomponenten des Paares aufnimmt. Die Elementsegmente sind durch einen Spalt voneinander beabstandet. Oder eine Abnehmerelektrode zum Abnehmen der elektrischen Polarisationsladungen kann aus mehreren Abnehmerelektrodensegmenten bestehen, so dass jedes Abnehmerelektrodensegment elektrische Polarisationsladungen von einer der Kraftkomponenten des Paares abnimmt. Auch die Abnehmerelektrodensegmente sind voneinander beabstandet.

Erfindungsgemäß sind Elementsegmente mit entgegengesetzter Polarisationsrichtung derart nebeneinander zu entgegengesetzten Wirkrichtungen eines Paares Kraftkomponenten der Momentenkomponente orientiert angeordnet, dass jedes Elementsegment eine der Kraftkomponenten des Paares aufnimmt. In weiteren bevorzugten Ausführungsformen sind Abnehmerelektrodensegmente an verschiedenen Elementseiten eines Elements angeordnet, wobei das Element mit seiner Polarisationsrichtung zu entgegengesetzten Wirkrichtungen eines Paares Kraftkomponenten der Momentenkomponente derart orientiert angeordnet ist, dass die Kraftkomponenten des Paares auf Elementflächen elektrische Polarisationsladungen erzeugen und dass jedes Abnehmerelektrodensegment elektrische Polarisationsladungen von einer der Kraftkomponenten des Paares abnimmt.

Der Komponentenaufnehmer benötigt vergleichsweise geringe Baumasse, ist konstruktiv robust aufgebaut und kostengünstig herstellbar.

Die Erfindung betrifft auch einen Mehrkomponentenaufnehmer unter Verwendung eines solchen Komponentenaufnehmers sowie eine Anwendung eines solchen Mehrkomponentenaufnehmers.

### Kurze Beschreibung der Zeichnungen

Im Folgenden wird die Erfindung beispielhaft unter Beizug der Figuren näher erklärt. Es zeigen
- Fig. 1: schematisch eine Ansicht eines konstruktiven Aufbaus eines Dreikomponentenaufnehmers aus dem Stand der Technik;
- Fig. 2: schematisch eine Ansicht eines Teils eines bekannten Komponentenaufnehmers für den Schubeffekt nach Fig. 1 beim Aufnehmen einer Momentenkomponente;
- Fig. 3: schematisch eine Ansicht eines Teils eines bekannten Komponentenaufnehmers für den Longitudinaleffekt nach Fig. 1 beim Aufnehmen einer Momentenkomponente;
- Fig. 4: schematisch eine Ansicht eines Teiles einer ersten Ausführungsform eines erfindungsgemässen Komponentenaufnehmers für den Schubeffekt beim Aufnehmen einer Momentenkomponente;
- Fig. 5: schematisch eine Ansicht eines Teiles einer zweiten Ausführungsform eines erfindungsgemässen Komponentenaufnehmers für den Schubeffekt beim Aufnehmen einer Momentenkomponente;
- Fig. 6: schematisch eine Ansicht eines Teiles einer dritten Ausführungsform eines erfindungsgemässen Komponentenaufnehmers für den Schubeffekt beim Aufnehmen einer Momentenkomponente;
- Fig. 7: schematisch eine Ansicht eines Teiles einer vierten Ausführungsform eines erfindungsgemässen Komponentenaufnehmers für den Schubeffekt beim Aufnehmen einer Momentenkomponente;
- Fig. 8: schematisch eine Ansicht eines Teiles einer ersten Ausführungsform eines erfindungsgemässen Komponentenaufnehmers für den Longitudinaleffekt beim Aufnehmen einer Momentenkomponente;
- Fig. 9: schematisch eine Ansicht eines Teiles einer zweiten Ausführungsform eines erfindungsgemässen Komponentenaufnehmers für den Longitudinaleffekt beim Aufnehmen einer Momentenkomponente;
- Fig. 10: schematisch eine Ansicht eines Teiles einer dritten Ausführungsform eines erfindungsgemässen Komponentenaufnehmers für den Longitudinaleffekt beim Aufnehmen einer Momentenkomponente;
- Fig. 11: schematisch eine Ansicht eines Teiles einer vierten Ausführungsform eines erfindungsgemässen Komponentenaufnehmers für den Longitudinaleffekt beim Aufnehmen einer Momentenkomponente;
- Fig. 12: einen Querschnitt eines konstruktiven Aufbaus einer Ausführungsform eines erfindungsgemässen Mehrkomponentenaufnehmers unter Verwendung von Komponentenaufnehmern nach Fig. 4, 5, 8 und 9;
- Fig. 13: eine Ansicht des Mehrkomponentenaufnehmers nach Fig. 12;
- Fig. 14: eine Explosionsdarstellung des konstruktiven Aufbaus des Mehrkomponentenaufnehmers nach Fig. 12;
- Fig. 15: eine perspektivische Darstellung von Bestandteilen des Mehrkomponentenaufnehmers nach Fig. 12 und
- Fig. 16: eine Ansicht einer Anwendung des Mehrkomponentenaufnehmers nach Fig. 12 bis 14.

### Wege zur Ausführung der Erfindung

Beim direkten piezoelektrischen Effekt werden elektrische Polarisationsladungen erzeugt, die proportional zur Grösse der auf das piezoelektrische Kristallmaterial wirkenden Kraft F sind. Piezoelektrisches Kristallmaterial wie Quarz (SiO₂ Einkristall), Calcium-Gallo-Germanat (Ca₃Ga₂Ge₄O₁₄ oder CGG), Langasit (La₃GaₛSiO₁₄ oder LGS), Turmalin, Galliumorthophosphat, usw. ist aus dem Buch "Piezoelectric Sensors" von G. Gautschi, veröffentlicht im Springer Verlag beschrieben. Das piezoelektrische Kristallmaterial wird so in Elemente mit kristallographisch orientierten Elementflächen geschnitten, dass es eine hohe Empfindlichkeit für die aufzunehmende Kraft F hat, d.h. dass auf den Elementflächen eine grosse Anzahl negativer und positiver elektrischer Polarisationsladungen erzeugt werden. Auf das kartesische Koordinatensystem der aufzunehmenden Kraft F bezogen, wird die Koordinatenachse der hohen Empfindlichkeit als Polarisationsrichtung P bezeichnet. In den Fig. 1 bis 11 ist die Polarisationsrichtung P von der Elementfläche mit negativen elektrischen Polarisationsladungen zur Elementfläche mit positiven elektrischen Polarisationsladungen gerichtet.

Die Kraft F weist Kraftkomponenten Fx, Fy, Fz auf, wobei die Indizes x, y, z die Elementflächen angeben, auf welche die Kraftkomponenten Fx, Fy, Fz wirken. Die Kraft F wirkt dabei entweder als Normalkraft oder als Schubkraft auf die Elementflächen. Eine Normalkraft wirkt entlang einer Wirkachse, die parallel zur Flächennormale der Elementfläche ist. Eine Schubkraft wirkt entlang einer Wirkachse, die senkrecht zur Flächennormale der Elementfläche ist. Für den direkten piezoelektrischen Effekt bedeutet dies, dass zwischen einem Longitudinaleffekt und einem Schubeffekt unterschieden wird. Beim Longitudinaleffekt werden elektrische Polarisationsladungen auf Elementflächen erzeugt, deren Flächennormale parallel zur Wirkachse der Normalkraft ist. Beim Schubeffekt werden elektrische Polarisationsladungen auf Elementflächen erzeugt, deren Flächennormale senkrecht zur Wirkachse der Schubkraft ist. Das piezoelektrische Kristallmaterial ist also so in Elemente mit kristallographisch orientierten Elementflächen geschnitten, dass deren Polarisationsrichtung P entweder parallel zur Wirkachse einer Normalkraft ist oder dass die Polarisationsrichtung P senkrecht zur Wirkachse einer Schubkraft ist.

Die Aufnahme von Kraftkomponenten Fx, Fy und Fz ist in Fig. 1 am Beispiel des aus der Schrift CH472668A bekannten Dreikomponentenaufnehmers veranschaulicht. Der Dreikomponentenaufnehmer weist mehrere Elemente 21 mit Elementflächen auf. Jedes Element 21 hat eine Polarisationsrichtung P, die parallel zur Z-Koordinatenachse ist. Die Aufnehmerelektrode 22 und die Elektrode 23 liegen in der XY-Ebene der Schubkraft und senkrecht zur Normalkraft. Ein erster Komponentenaufnehmer 20 erfasst den Schubeffekt der X-Wirkachse einer Schubkraft. Ein zweiter Komponentenaufnehmer 20 erfasst den Longitudinaleffekt der Z-Wirkachse einer Normalkraft. Ein dritter Komponentenaufnehmer 20 erfasst den Schubeffekt der Y-Wirkachse einer Schubkraft.

Eine Momentenkomponente Mx, My, Mz besteht aus mindestens einem Paar mit Kraftkomponenten. Die Kraftkomponenten eines Paares sind zueinander parallel (mit gleicher Wirkachse) und haben entgegengesetzte Wirkrichtung. Das Indize x, y, z gibt die Wirkachse der Momentenkomponente Mx, My, Mz an. Die Momentenkomponente Mz weist zwei Paare mit Kraftkomponenten +Fx, -Fx und +Fy, -Fy auf. Die Momentenkomponente Mx weist ein Paar mit Kraftkomponenten +Fz, -Fz auf. Die Momentenkomponente My weist ebenfalls ein Paar mit Kraftkomponenten +Fz, -Fz auf.

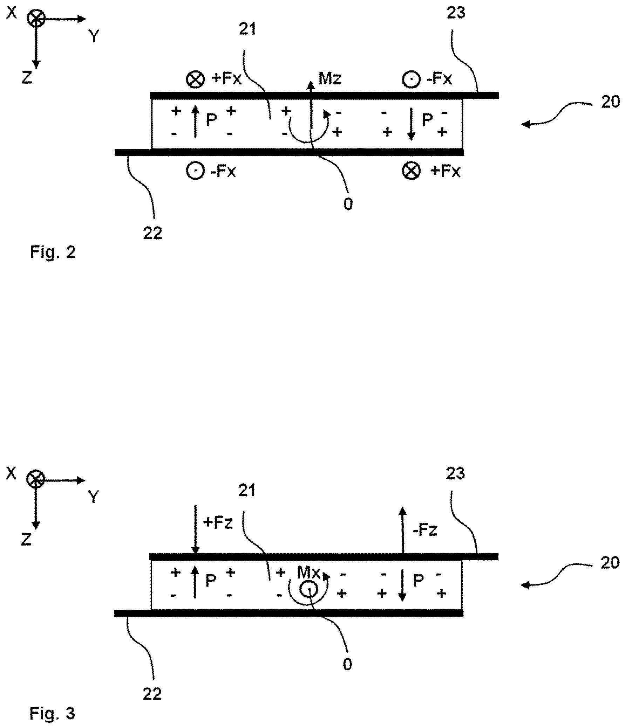

Die Aufnahme einer Momentenkomponente ist mit dem bekannten Dreikomponentenaufnehmer nach Fig. 1 nicht möglich. Dies ist anhand der Fig. 2 und 3 veranschaulicht. Dazu zeigt Fig. 2 einen Teil des ersten Komponentenaufnehmers 20 für den Schubeffekt der X-Wirkachse einer Schubkraft nach Fig. 1. Die in Fig. 2 aufzunehmende Momentenkomponente Mz weist ein Paar Schubkraftkomponenten +Fx, -Fx auf und sie weist ein Paar Schubkraftkomponenten +Fy, -Fy auf. Der erste Komponentenaufnehmer 20 nimmt aber nur das entlang der X-Koordinatenachse wirkende Paar Schubkraftkomponenten +Fx und -Fx der Momentenkomponente Mz auf. Fig. 3 zeigt einen Teil des zweiten Komponentenaufnehmers 20 für den Longitudinaleffekt der Z-Wirkachse einer Normalkraft nach Fig. 1. Die in Fig. 3 aufzunehmende Momentenkomponente Mx weist nur ein Paar Normalkraftkomponenten +Fz, -Fz auf. Der zweite Komponentenaufnehmer 20 nimmt aber nur das entlang der Z-Koordinatenachse wirkende Paar Normalkraftkomponenten +Fz und -Fz der Momentenkomponente Mx auf. Aufgrund der entgegengesetzten Wirkrichtung der beiden Kraftkomponenten +Fx und -Fx nach Fig. 2 und +Fz und -Fz nach Fig. 3 werden auf der Elementfläche der Abnehmerelektrode 22 sowohl negative elektrische Polarisationsladungen als auch positive elektrische Polarisationsladungen erzeugt. Eine Summe der von der Abnehmerelektrode 22 abgenommenen elektrischen Polarisationsladungen ist Null, d.h. der Komponentenaufnehmer 20 erfasst die Momentenkomponenten Mz und Mx nicht.

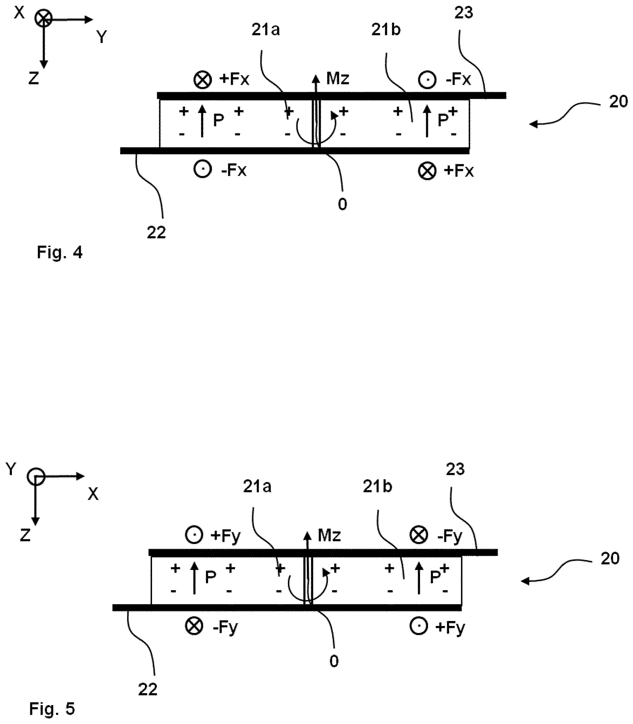

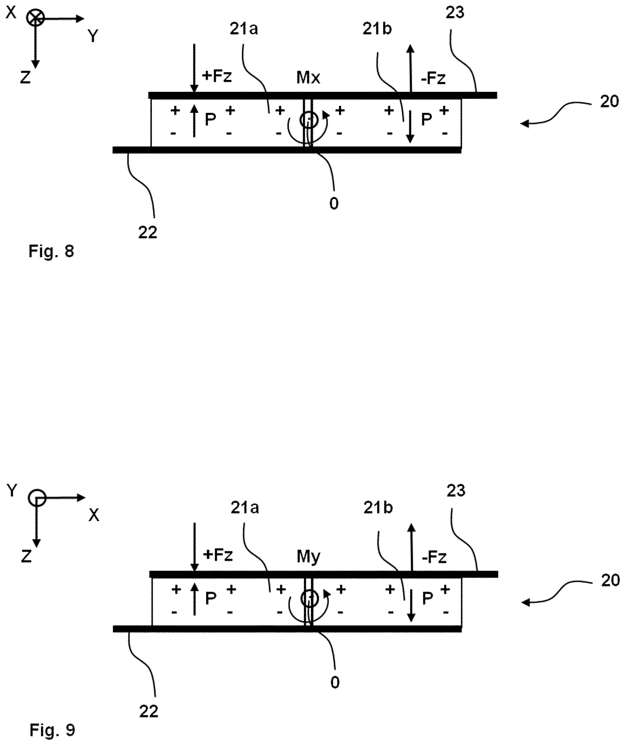

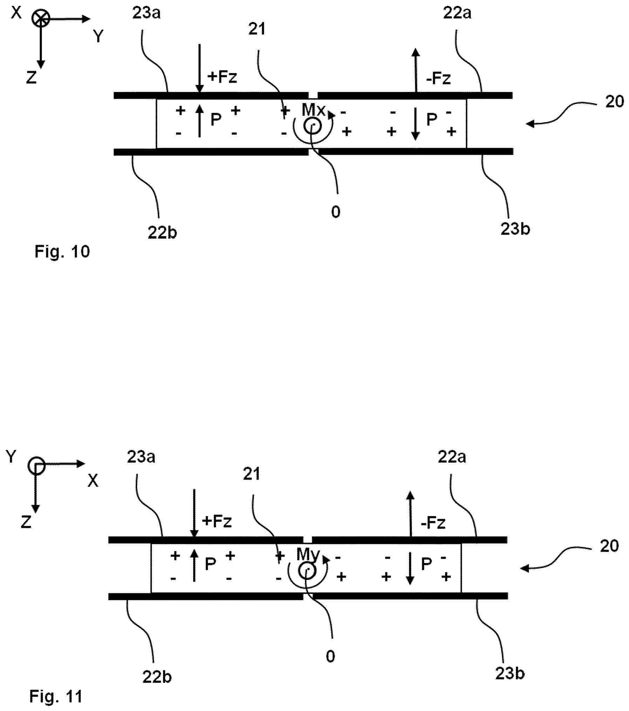

Die Fig. 4 bis 7 zeigen Teile von vier Ausführungsformen eines erfindungsgemässen Komponentenaufnehmers 20 für den Schubeffekt bei der Aufnahme einer Momentenkomponente Mz mit einem Paar Schubkraftkomponenten +Fx, -Fx und einem Paar Schubkraftkomponenten +Fy, -Fy. Die Fig. 8 und 10 zeigen Teile von zwei Ausführungsformen eines erfindungsgemässen Komponentenaufnehmers 20 für den Longitudinaleffekt bei der Aufnahme einer Momentenkomponente Mx mit einem Paar Normalkraftkomponenten +Fz, -Fz. Die Fig. 9 und 11 zeigen Teile von zwei Ausführungsformen eines erfindungsgemässen Komponentenaufnehmers 20 für den Longitudinaleffekt bei der Aufnahme einer Momentenkomponente My mit einem Paar Normalkraftkomponenten +Fz, -Fz. Für eine nachvollziehbare Vergleichbarkeit mit den Komponentenaufnehmern 20 aus dem Stand der Technik nach Fig. 2 (Schubeffekt) und Fig. 3 (Longitudinaleffekt) sind die Figuren ähnlich gezeichnet und die Bezugszeichen gleich. Es wird daher auf die Beschreibung der Fig. 1 bis 3 verwiesen und im Folgenden werden hautsächlich die Unterschiede dazu dargelegt.

In den Ausführungsformen nach Fig. 4, 5, 8 und 9 besteht das Element 21 aus piezoelektrischem Kristallmaterial aus mehreren Elementsegmenten 21a, 21b. Die Elementsegmente 21a, 21b sind identische Hälften eines in der XZ-Ebene entzwei geschnittenen scheibenförmigen oder ringförmige Elements 21 aus piezoelektrischem Kristallmaterial nach Fig. 1 bis 3. Die Elementsegmente 21a, 21b sind also Halbkreise, die durch Stossflächen begrenzt sind. Die Stossflächen sind parallel zur XZ-Ebene, bzw. zur YZ-Ebene in Fig. 4, 5, 8 und 9 ist ein Spalt zwischen den Stossflächen dargestellt. Die Elementsegmente 21a, 21b sind durch den Spalt voneinander beabstandet. Die beiden Elementsegmente 21a, 21b sind nebeneinander in der XY-Ebene zwischen der Abnehmerelektrode 22 und der Elektrode 23 angeordnet. Die Abnehmerelektrode 22 ist einseitig an einer bezüglich der Elementmitte 0 unteren Elementseite angeordnet. Nach Fig. 4, 5, 8 und 9 nimmt die Abnehmerelektrode 22 elektrische Polarisationsladungen der beiden bezüglich der Elementmitte 0 unteren Elementflächen der Elementsegmente 21a, 21b ab und liefert das Ausgangssignal. Die Polarisationsrichtung P der beiden Elementsegmente 21a, 21b ist parallel zur Z-Koordinatenachse, jedoch ist ihre Polarisationsrichtung P entgegengesetzt. Die Elementsegmente 21a, 21b sind derart mit entgegengesetzter Polarisationsrichtung P zu entgegengesetzten Wirkrichtungen der Kraftkomponenten +Fx, -Fx, +Fy, -Fy, +Fz, -Fz eines Paares orientiert angeordnet, dass das erste Elementsegment 21a die erste Kraftkomponente +Fx nach Fig. 4, +Fy nach Fig. 5 und +Fz nach Fig. 8 und 9 des Paares aufnimmt und dass das zweite Elementsegment 21b die zweite Kraftkomponente -Fx nach Fig. 4, -Fy nach Fig. 5 und - Fz nach Fig. 8 und 9 des Paares aufnimmt. Die aufgenommenen Kraftkomponenten erzeugen auf der Elementfläche der Abnehmerelektrode 22 negative elektrische Polarisationsladungen. Die einseitig an den Elementflächen der beiden Elementsegmente 21a, 21b angeordnete Abnehmerelektrode 22 nimmt diese negativen elektrischen Polarisationsladungen ab. Somit ist die Summe der von der Abnehmerelektrode 22 abgenommenen elektrischen Polarisationsladungen proportional zum Betrag der Momentenkomponente Mz nach Fig. 4 und 5 bzw. proportional zum Betrag der Momentenkomponente Mx nach Fig. 8 bzw. proportional zum Betrag der Momentenkomponente My nach Fig. 9, d.h. der Komponentenaufnehmer 20 erfasst die Momentenkomponente Mz bzw. Mx bzw. My.

Bei Kenntnis der vorliegenden Erfindung kann der Fachmann im Komponentenaufnehmer auch anders geformte Elementsegmente und/oder im Komponentenaufnehmer eine grössere Anzahl von Elementsegmenten verwenden. So kann er anstatt scheibenförmiger Elementsegmente auch rechteckige Elementsegmente verwenden. Und er kann vier oder sechs und mehr Elementsegmente verwenden. Auch bei Verwendung von mehr als zwei Elementsegmenten sind die Elementsegmente pro Elementseite mit unterschiedlicher Polarität nebeneinander in der Wirkebene angeordnet. Vier Elementsegmente können so auf einer Elementseite angeordnet sein, dass alle vier Elementsegmente identisch gross sind und dass pro Elementseite gleich viele Elementflächen positiv polarisiert sind und gleich viele Elementflächen negativ polarisiert sind.

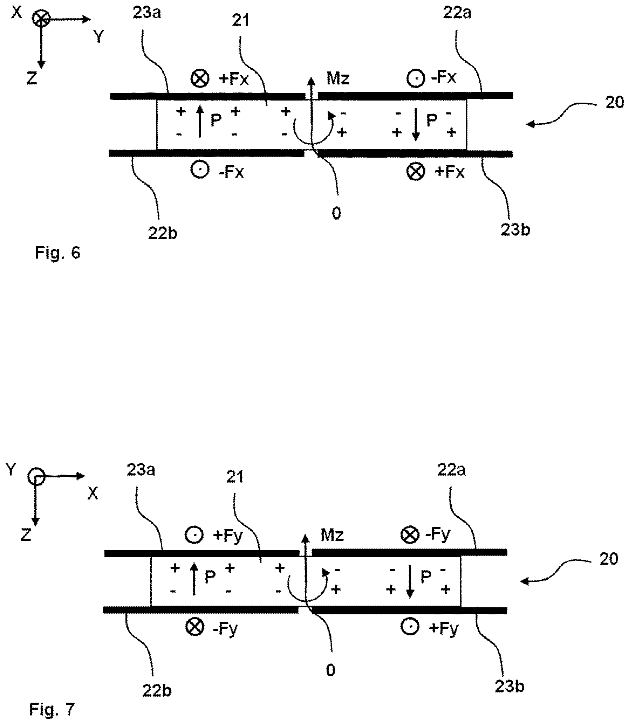

In den Ausführungsformen nach Fig. 6, 7, 10 und 11 besteht die Abnehmerelektrode 22 aus mehreren Abnehmerelektrodensegmenten 22a, 22b. Die Abnehmerelektrodensegmente 22a, 22b sind identische Hälften einer in der XZ-Ebene halbierten scheibenförmigen oder ringförmige Abnehmerelektrode 22 nach Fig. 1 bis 3. Die Abnehmerelektrodensegmenten 22a, 22b sind in der XY-Ebene angeordnet. Die Abnehmerelektrodensegmenten 22a, 22b sind beidseitig, d.h. bezüglich der Elementmitte 0 oberhalb und unterhalb der beiden Elementflächen angeordnet. Die Abnehmerelektrodensegmente 22a, 22b sind durch das Element 21 voneinander beabstandet. Nach Fig. 6, 7, 10 und 11 nimmt ein erstes Abnehmerelektrodensegment 22a negativ geladene elektrische Polarisationsladungen von einer bezüglich der Elementmitte 0 oberen Elementfläche ab und ein zweites Abnehmerelektrodensegment 22b nimmt negativ geladene elektrische Polarisationsladungen von einer bezüglich der Elementmitte 0 unteren Elementfläche ab. Das Element 21 ist mit seiner Polarisationsrichtung P derart zu entgegengesetzten Wirkrichtungen der Kraftkomponenten +Fx, -Fx; +Fy, -Fy; +Fz, -Fz eines Paares orientiert angeordnet, dass das erste Abnehmerelektrodensegment 22a von der ersten Kraftkomponente +Fx, +Fy, +Fz des Paares erzeugte elektrische Polarisationsladungen abnimmt und dass das zweite Abnehmerelektrodensegment 22b von der zweiten Kraftkomponente -Fx, -Fy, -Fz des Paares erzeugte elektrische Polarisationsladungen abnimmt. Diese abgenommenen elektrischen Polarisationsladungen sind das Ausgangssignal.

Die Elektrode besteht ähnlich wie die Abnehmerelektrode aus mehreren Elektrodensegmenten 23a, 23b. Die Elektrodensegmente 23a, 23b sind identische Hälften einer in der XZ-Ebene halbierten scheibenförmigen Elektrode 23 nach Fig. 1 bis 3. Die Abnehmerelektrodensegmenten 22a, 22b sind in der XY-Ebene auf gegenüberliegenden Elementflächen angeordnet. Die Elektrodensegmente 23a, 23b sind beidseitig, d.h. bezüglich der Elementmitte 0 oberhalb und unterhalb von Elementflächen angeordnet. Nach Fig. 6, 7, 10 und 11 nimmt ein erstes Elektrodensegment 23a positiv geladene elektrische Polarisationsladungen von der bezüglich der Elementmitte 0 oberen Elementfläche ab und ein zweites Elektrodensegment 23b nimmt positiv geladene elektrische Polarisationsladungen von der bezüglich der Elementmitte 0 unteren Elementfläche ab. Das erste und das zweite Elektrodensegment 23a, 23b sind geerdet. Die Summe der von den Abnehmerelektrodensegmenten 22a, 22b abgenommenen elektrischen Polarisationsladungen ist proportional zum Betrag der Momentenkomponente Mz nach Fig. 6 und 7 bzw. proportional zum Betrag der Momentenkomponente Mx nach Fig. 10 bzw. proportional zum Betrag der Momentenkomponente My nach Fig. 11, d.h. der Komponentenaufnehmer 20 erfasst die Momentenkomponente Mz bzw. Mx bzw. My.

Auch bei dieser Ausführungsform kann der Fachmann bei Kenntnis der vorliegenden Erfindung im Komponentenaufnehmer anders geformte Abnehmerelektrodensegmente bzw. Elektrodensegmente und/oder im Komponentenaufnehmer eine grössere Anzahl von Abnehmerelektrodensegmenten bzw. Elektrodensegmenten verwenden. So kann er anstatt scheibenförmiger oder ringförmiger Abnehmerelektrodensegmente bzw. Elektrodensegmente auch rechteckige Abnehmerelektrodensegmente bzw. Elektrodensegmente verwenden. Und er kann vier oder sechs und mehr Abnehmerelektrodensegmente bzw. Elektrodensegmente verwenden. Und bei Verwendung von mehr als zwei Abnehmerelektrodensegmente bzw. Elektrodensegmente sind die Abnehmerelektrodensegmente bzw. Elektrodensegmente in der Wirkebene bezüglich der Elementmitte oberhalb und unterhalb von Elementflächen angeordnet. Vier Abnehmerelektrodensegmente bzw. vier Elektrodensegmente pro Elementfläche können so angeordnet sein, dass alle vier Abnehmerelektrodensegmente bzw. alle vier Elektrodensegmente identisch gross sind und dass an jeder Elementfläche eine gleiche Anzahl von Abnehmerelektrodensegmente bzw. Elektrodensegmente angeordnet ist. Schliesslich kann der Fachmann die Abnahme der elektrischen Polarisationsladungen anders vornehmen. Während in der Erfindung die Abnehmerelektrode positive elektrische Polarisationsladungen abnimmt und damit ein Ausgangssignal liefert, kann der Fachmann natürlich auch eine Abnehmerelektrode vorsehen, die negative elektrische Polarisationsladungen abnimmt.

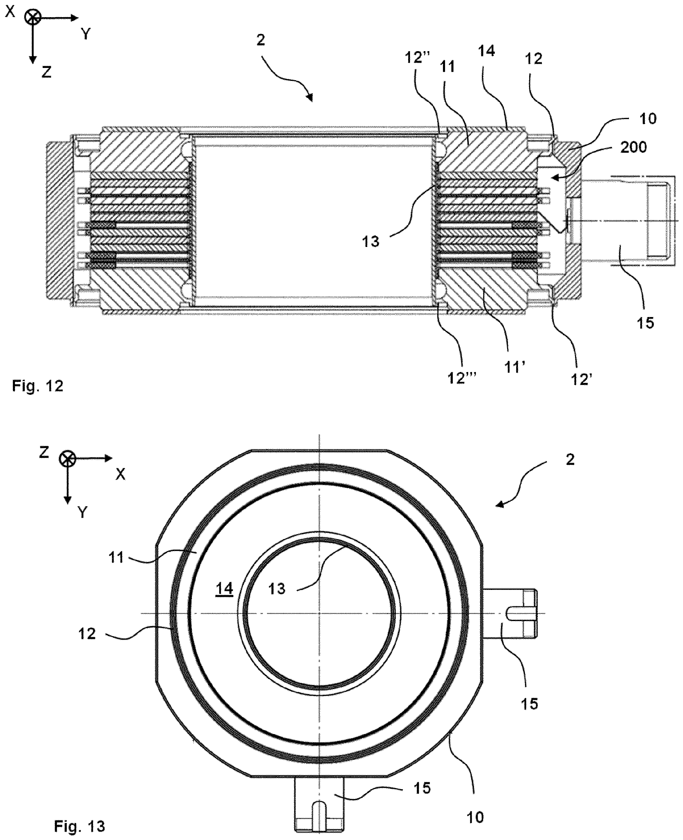

Fig. 12 zeigt einen Querschnitt eines konstruktiven Aufbaus einer bevorzugten Ausführungsform eines erfindungsgemässen Mehrkomponentenaufnehmers 1. Der Mehrkomponentenaufnehmer 2 weist ein Gehäuse 10, bestehend aus einer runden oder eckigen Platte mit einer zentralen Durchgangsbohrung in Richtung einer Z-Koordinatenachse auf. Eine obere und eine untere Begrenzung des Gehäuses 10 sind parallel zueinander in einer XY-Ebene angeordnet. Das Gehäuse 10 schützt den Mehrkomponentenaufnehmer 2 von Stössen und Schlägen, die während des Betriebs auftreten. Das Gehäuses 10 schützt den Mehrkomponentenaufnehmer 2 aber auch vor schädlichen Umwelteinflüssen wie Verunreinigungen (Staub, Feuchtigkeit, usw.. Schliesslich schützt das Gehäuse 10 den Mehrkomponentenaufnehmer 2 vor elektrischen und elektromagnetischen Störeffekten in Form von elektromagnetischer Strahlung.

In der Durchgangsbohrung ist eine Gruppe 200 von Komponentenaufnehmern in Richtung der Z-Koordinatenachse gesehen zwischen zwei Kraftübertragungsplatten 11, 11' angeordnet. Die Kraftübertragungsplatten 11, 11' und die Gruppe 200 sind Hohlzylinder mit einem Aussenradius und einem Innenradius. Aussenradius und einem Innenradius sind beide grösser als eine Mantelhöhe der Hohlzylinder. Beispielsweise betragen bei den Kraftübertragungsplatten 11, 11' und bei der Gruppe 200 der Aussenradius 25mm und der Innenradius 15mm. Beispielsweise beträgt bei den Kraftübertragungsplatten 11, 11' die Mantelhöhe 5mm, und bei der Gruppe 200 beträgt die Mantelhöhe 10mm.

Die Kraftübertragungsplatten 11, 11' nehmen die aufzunehmenden Kräfte und Momente auf und leiten sie auf die Gruppe 200. Dazu sind die Kraftübertragungsplatten 11, 11' an ihrem Aussenradius über erste Kragen 12, 12' elastisch unter Vorspannung in Richtung der Z-Koordinatenachse mit dem Gehäuse 10 verbunden. Die Kraftübertragungsplatten 11, 11' und die Kragen 12, 12' sind einstückig gefertigt. Die Verbindung der Kragen 12, 12' mit den Begrenzungen des Gehäuses 10 erfolgt über Stoffschluss. An ihrem Innenradius sind die beiden Kraftübertragungsplatten 11, 11' über weitere Kragen 12", 12'" stoffschlüssig unter Vorspannung mit einer Innenhülse 13 verbunden. Die Innenhülse 13 ist hülsenförmig und erstreckt sich in Richtung der Z-Koordinatenachse. Die beiden Kraftübertragungsplatten 11, 11' sind somit über die Kragen 12, 12', 12", 12'" mit einer definierten ersten mechanischen Vorspannung gegen die Gruppe 200 vorgespannt. Die Gruppe 200 ist somit ein erstes Mal vorgespannt. Die erste mechanische Vorspannung gewährleistet einen sehr guten elektrischen Kontakt zu den Abnehmerelektroden, den Abnehmerelektrodensegmenten, den Elektroden und den Elektrodensegmenten. Die Wandstärke der Innenhülse 13 ist kleiner/gleich 0.1mm. Die Grössenordnung der ersten mechanischen Vorspannung liegt im Bereich von mehreren kN. Als stoffschlüssige Verbindungen lassen sich Schweissen, Löten und Kleben verwenden.

Das Gehäuse 10, die Kraftübertragungsplatten 11, 11' und die Innenhülse 13 sind aus mechanisch robustem Material wie Edelstahl, Stahllegierungen, usw. gefertigt. Das Gehäuse 10, die Kraftübertragungsplatten 11, 11' und die Innenhülse 13 dichten den Mehrkomponentenaufnehmer 2 gasdicht ab. Eine Deckplatte 14 aus Material mit hoher Reibungszahl wie Keramik, Stahl, usw. ist aussenseitig auf Oberflächen der Kraftübertragungsplatten 11, 11' angebracht. Die Deckplatte 14 ist beispielsweise stoffschlüssig durch Verkleben, Löten, usw. angebracht. Die Deckplatte 14 ermöglicht durch die hohe Reibungszahl ein weitgehend verlustfreies Einleiten der aufzunehmenden Kräfte und Momente auf die Kraftübertragungsplatten 11, 11'.

Die Gruppe 200 weist mehrere Komponentenaufnehmer 20 auf. Ein Jeder Komponentenaufnehmer 20 weist Elemente 21 oder Elementsegmente 21a, 21b, eine Abnehmerelektrode 22 und eine Elektrode 23 auf. Für die Beschreibung der Elemente 21 und der Elementsegmente 21a, 21b sowie der Abnehmerelektrode 22 und der Elektrode 23 wird auf die Beschreibung der Fig. 1 bis 11 verwiesen. Die Elemente 21, die Elementsegmente 21a, 21b, die Abnehmerelektrode 22 und die Elektrode 23 haben einen weitgehend identischen Innenradius, einen weitgehend identischen Aussenradius und sind parallel zueinander in der XY-Ebene angeordnet.

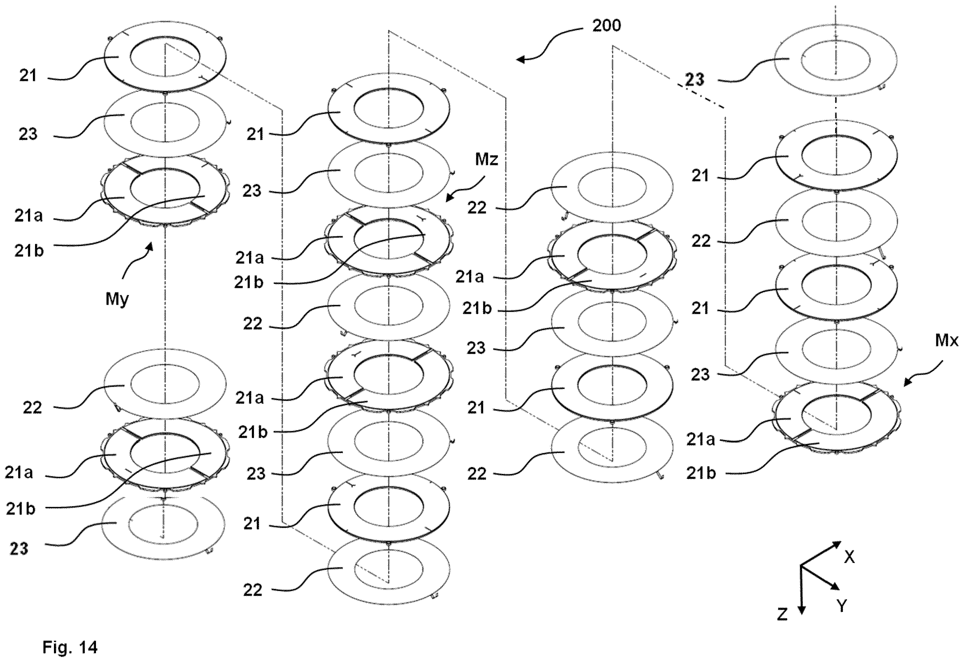

In der Explosionsdarstellung nach Fig. 14 sind sechs Komponentenaufnehmer 20 der Gruppe 200 in Richtung der Z-Koordinatenachse übereinander gestapelt angeordnet. Der Mehrkomponentenaufnehmer 2 nimmt über drei Komponentenaufnehmer 20 jeweils eine Kraftkomponente Fx, Fy, Fz direkt auf und der Komponentenaufnehmer 20 nimmt über drei Komponentenaufnehmer 20 jeweils eine Momentenkomponente Mx, My, Mz direkt auf. Über Anschlüsse 15 lassen sich die Ausgangssignale der Komponentenaufnehmer 20 an eine nicht dargestellte Auswerteeinheit übermitteln.

Die Komponentenaufnehmer 20 für die Kraftkomponenten Fx, Fy, Fz verwenden scheibenförmige Elemente 21 mit einer Polarisationsrichtung P, die parallel zur Z-Koordinatenachse ist. Jeweils zwei in jeweils einer Lage angeordnete Elemente 21 sind elektrisch zu einem Elementepaar parallel geschaltet. Jeder Komponentenaufnehmer 20 für die Kraftkomponenten Fx, Fy, Fz weist somit ein Elementepaar mit zwei Lagen mit Elementen 21, eine Abnehmerelektrode 22 und zwei Elektroden 23 auf. Die Abnehmerelektrode 22 liegt zwischen den beiden Lagen mit Elementen 21. Die Abnehmerelektrode 22 liegt zwischen gleich polarisierten Elementflächen des Elementepaares und liefert ein Ausgangssignal. Jeweils eine Elektrode 23 liegt aussen an den beiden Lagen mit Elementen 21 und ist geerdet. Ein erster Komponentenaufnehmer 20 erfasst den Schubeffekt der X-Wirkachse einer Schubkraft. Ein zweiter Komponentenaufnehmer 20 erfasst den Schubeffekt der Y-Wirkachse einer Schubkraft. Ein dritter Komponentenaufnehmer 20 erfasst den Longitudinaleffekt der Z-Wirkachse einer Normalkraft.

Die Komponentenaufnehmer 20 für die Momentenkomponenten Mx, My, Mz verwenden scheibenförmige Elementsegmente 21a, 21b mit einer Polarisationsrichtung P, die parallel zur Z-Koordinatenachse ist. Die Elementsegmente 21a, 21b sind Halbkreise, die durch Stossflächen begrenzt sind. Die Stossflächen sind parallel zur XZ-Ebene und durch einen Spalt voneinander getrennt. Jeweils zwei Elementsegmente 21a, 21b sind mit entgegengesetzter Polaritätsrichtung P nebeneinander in einer Lage in der XY-Ebene zwischen der Abnehmerelektrode 22 und der Elektrode 23 angeordnet. Jeweils zwei Lagen mit Elementsegmenten 21a, 21b sind elektrisch zu einem Elementesegmentpaar parallel geschaltet. Jeder Komponentenaufnehmer 20 für die Momentenkomponenten Mx, My, Mz weist ein Elementesegmentpaar mit zwei Lagen Elementsegmenten 21a, 21b, eine Abnehmerelektrode 22 und zwei Elektroden 23 auf. Auf. Die Abnehmerelektrode 22 liegt zwischen den beiden Lagen mit Elementsegmenten 21a, 21b. Die Abnehmerelektrode 22 liegt zwischen Elementflächen des Elementesegmentpaares und liefert ein Ausgangssignal. Jeweils eine Elektrode 23 liegt aussen an den beiden Lagen mit Elementsegmenten 21a, 21b und ist geerdet.

Ein vierter Komponentenaufnehmer 20 erfasst den Longitudinaleffekt des Paares Kraftkomponenten +Fz und -Fz der Momentenkomponente Mx. Der Spalt zwischen Stossflächen von zwei Elementsegmenten 21a, 21b des vierten Komponentenaufnehmers 20 ist in beiden Lagen parallel zur X-Wirkachse der Momentenkomponente Mx orientiert angeordnet. Ein fünfter Komponentenaufnehmer 20 erfasst den Longitudinaleffekt des Paares Kraftkomponenten +Fz und -Fz der Momentenkomponente My. Der Spalt zwischen Stossflächen von zwei Elementsegmenten 21a, 21b des fünften Komponentenaufnehmers 20 in beiden Lagen parallel zur Y-Wirkachse der Momentenkomponente My orientiert angeordnet. Ein sechster Komponentenaufnehmer 20 erfasst den Schubeffekt des ersten Paares Kraftkomponenten +Fx und -Fx und des zweiten Paares Kraftkomponenten +Fy und -Fy der Momentenkomponente Mz. Der Spalt zwischen Stossflächen von zwei Elementsegmenten 21a, 21b des sechsten Komponentenaufnehmers 20 ist in einer Lage parallel zur X-Wirkachse des ersten Paares Kraftkomponenten +Fx und -Fx orientiert angeordnet. Der Spalt zwischen Stossflächen von zwei Elementsegmenten 21a, 21b des sechsten Komponentenaufnehmers 20 ist in einer anderen Lage parallel zur Y-Wirkrichtung des zweiten Paares Kraftkomponenten +Fy und -Fy orientiert angeordnet.

Die Empfindlichkeit der Elemente 21 und der Elementsegmente 21a, 21b beträgt typischerweise 100pC/Nm bis 1000pC/Nm.

Die Abnehmerelektroden 22 und die Elektroden 23 können aus Metallisierungen der Elemente 21 und Elementsegmente 21a, 21b aus piezoelektrischem Kristallmaterial bestehen oder sie können aus eigenständigen Metallfolien bestehen. Die Metallisierungen oder die Metallfolien bestehen aus elektrisch leitendem Metall wie Stahl, Kupfer, Kupferlegierungen, usw.. Eine Mantelhöhe der Elemente 21 und der Scheibensegemente 21a, 21b beträgt rund 0.8mm, eine Mantelhöhe der Abnehmerelektroden 22 und der Elektroden 23 beträgt 0.1mm.

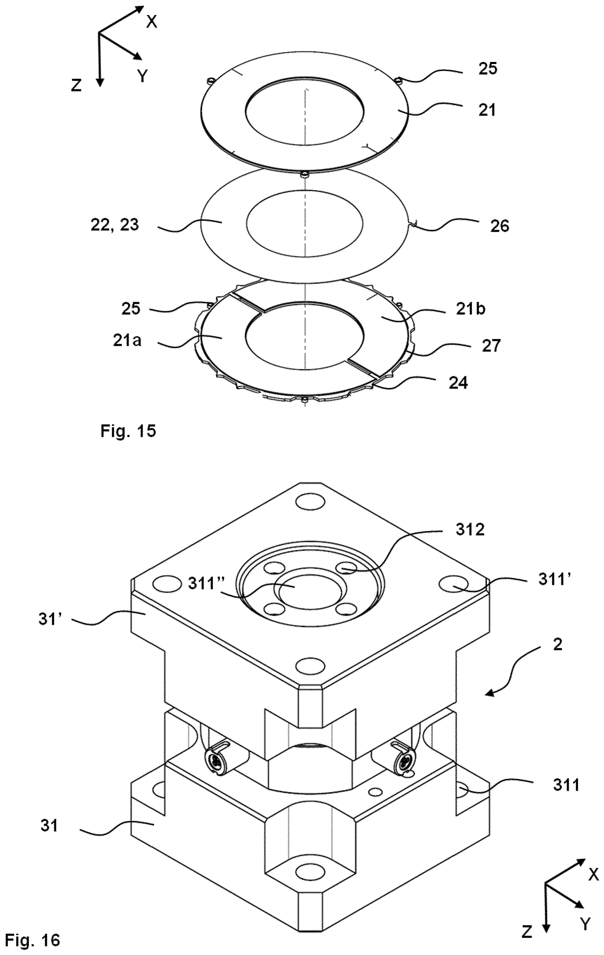

Fig. 15 zeigt weitere Details von Bestandteilen des Mehrkomponentenaufnehmers 2 zum Element 21, zu den Elementsegmenten 21a, 21b, zur Abnehmerelektrode 22 und zur Elektrode 23.

Jedes Elementsegment 21a, 21b weist ein Ringelement 24 auf. Das bandförmige Ringelement 24 ist aussenseitig an einer Mantelfläche der Elementsegmente 21a, 21b angebracht. Das Ringelement 24 ist beispielsweise durch Formschluss an der Mantelfläche angebracht. Das Ringelement 24 ist aus Isolatormaterial wie Teflon®, Kapton®, usw. hergestellt. Eine Mantelhöhe des Ringelements 24 beträgt 0.6mm. Eine Wandstärke des Ringelements 24 beträgt rund 1.0mm. Mehrere Halterungen 27 sind am Ringelement 24 angebracht. Die Halterungen 27 sind an der von den Elementsegmenten 21a, 21b abgewandten Seite des Ringelements 24 angebracht. Das Ringelement 24 und die Halterungen 27 sind einstückig hergestellt. Die Halterungen 27 sind radiale Vorsprünge des Ringelements 24 und halten die Elementsegmente 21a, 21b mechanisch zentriert und elektrisch isoliert am Gehäuse 10.

Drei Ösen 25 sind im Winkel von 120° am Element 21 und an den beiden Elementsegmenten 21a, 21b angebracht. Die Ösen 25 sind an der vom Element 21 und den Elementsegmenten 21a, 21b abgewandten Seite des Ringelements 24 angebracht. Die Ösen 25 sind kreisförmig mit einer in der X-Y-Ebene angeordneten Zentralöffnung. Die Ösen 25 befestigen das Element 21 und die Elementsegmente 21a, 21b mechanisch oder mechanisch zentriert am Gehäuse 10. Beispielsweise rasten die Ösen 25 kraft- und formschlüssig in entsprechende Aussparungen des Gehäuses 10 ein. Die Ösen 25 rasten federnd in die Aussparungen des Gehäuses 10 ein. Beim Einrasten wird die kreisförmige Öse 25 in der X-Y-Ebene verformt und spannt das Element 21 und die Elementsegmente 21a, 21b in der X-Y-Ebene zusätzlich gegen das Gehäuse 10 ein. Das Ringelement 24 und die Ösen 25 sind einstückig hergestellt.

Die Abnehmerelektrode 22 und die Elektrode 23 weisen jeweils einen Kontakt 26 auf. Der Kontakt 26 ist aussenseitig an einer Mantelfläche der Abnehmerelektrode 22 und der Elektrode 23 angebracht. Der Kontakt 26 dient der elektrischen Kontaktierung der Abnehmerelektrode 22 mit dem Anschluss 15. Der Kontakt 26 dient der elektrischen Kontaktierung der Elektrode 23 mit einer Erdung. Der Kontakt 26 ist einstückig mit dem Material von Abnehmerelektrode 22 und Elektrode 23. Die elektrische Kontaktierung erfolgt beispielsweise durch stoffschlüssige Verbindung wie Schweissen, Löten, usw. mit elektrischen Leitern.

Fig. 16 zeigt eine Anwendung des Mehrkomponentenaufnehmers 2 zwischen zwei Montageplatten 31, 31'. Eine erste Montageplatte 31 ist in der Ansicht nach Fig. 12 oberhalb des Mehrkomponentenaufnehmers 2 angeordnet, eine zweite Montageplatte 31 ist unterhalb des Mehrkomponentenaufnehmers 2 angeordnet. Die Montageplatten 31, 31' sind aus mechanisch robustem Material wie Edelstahl, Stahllegierungen, usw. gefertigt. Über Montageplattenöffnungen 311, 311', 311" lassen sich die Montageplatten 31, 31' mechanisch mit einer Maschinenstruktur verbinden. Über vier dezentrale Montageplattenöffnungen 311, 311' bzw. eine zentrale Montageplattenöffnung 311" lässt sich der Mehrkomponentenaufnehmer 2 mit grosser Biegesteifigkeit mit der Maschinenstruktur verbinden. Typische Maschinenstrukturen sind Werkzeugtische von Zerspanmaschinen, Waagen, Rütteltische, humanoide Roboter, Handwurzelsensoren, usw..

Über Spanneröffnungen 312 lassen sich die Montageplatten 31, 31' mit einer definierten zweiten mechanischen Vorspannung gegen das Gehäuse 10 des Mehrkomponentenaufnehmers 2 spannen. Die zweite mechanische Vorspannung beträgt beispielsweise 140kN. Die zweite mechanische Vorspannung wirkt in Richtung der Z-Koordinatenachse und spannt über das Gehäuse 10 die Kraftübertragungsplatten 11, 11' gegen die Gruppe 200. Die Gruppe 200 ist somit ein zweites Mal vorgespannt. Die zweite mechanische Vorspannung der Gruppe 200 ermöglicht das Aufnehmen von grossen negativen Kräften und Momenten. Die mechanische Verbindung mit der Maschinenstruktur sowie die zweite mechanische Vorspannung erfolgen form- und kraftschlüssig über nicht dargestellte Schrauben, Nieten, usw.. Bei Kenntnis der vorliegenden Erfindung kann der Fachmann den Mehrkomponentenaufnehmer mit kleiner oder grösser dimensionierten Montageplatten verwenden. Auch kann der Fachmann den Mehrkomponentenaufnehmers ohne solche Montageplatte verwenden.

### Bezugszeichenliste

- F: Kraft
- Fx, Fy, Fz: Kraftkomponente
- Mx, My, Mz: Momentenkomponente
- X, Y, Z: Koordinatenachse
- x, y, z: Indize
- 0: Elementmitte
- 1: Mehrkomponentenaufnehmer
- 10: Gehäuse
- 11, 11': Kraftübertragungsplatte
- 12, 12' 12", 12''': Kragen
- 13: Innenhülse
- 14: Deckplatte
- 15: Anschluss
- 20: Komponentenaufnehmer
- 21: Element
- 21a, 21b: erstes und zweites Segment
- 22: Abnehmerelektrode
- 22a, 22b: erstes und zweites Abnehmerelektrodensegment
- 23: Elektrode
- 23a, 23b: erstes und zweites Elektrodensegment
- 24: Ringelement
- 25: Öse
- 26: Kontakt
- 27: Halterung
- 31, 31': erste und zweite Montageplatte
- 200: Gruppe
- 311, 311', 311": Montageplattenöffnung
- 312: Spanneröffnung

## Patentansprüche

1. Komponentenaufnehmer (20) zur Aufnahme einer Momentenkomponente (Mx, My, Mz); mit einem Element (21) aus piezoelektrischem Kristallmaterial, welches Element (21) Elementflächen hat; wobei eine Kraftkomponente (Fx, Fy, Fz) elektrische Polarisationsladungen auf den Elementflächen erzeugt; wobei die aufzunehmende Momentenkomponente (Mx, My, Mz) aus mindestens einem Paar mit Kraftkomponenten (+Fx, -Fx; +Fy, -Fy; +Fz, -Fz) besteht, welche Kraftkomponenten (+Fx, -Fx; +Fy, -Fy; +Fz, -Fz) eines Paares eine gleiche Wirkachse und entgegengesetzte Wirkrichtungen haben; wobei das Element (21) die Kraftkomponenten (+Fx, -Fx; +Fy, -Fy; +Fz, -Fz) eines Paares getrennt aufnimmt; wobei das Element (21) aus Elementsegmenten (21a, 21b) besteht; und wobei die Elementsegmente (21a, 21b) derart mit entgegengesetzter Polarisationsrichtung (P) zu entgegengesetzten Wirkrichtungen der Kraftkomponenten (+Fx, -Fx; +Fy, -Fy; +Fz, -Fz) eines Paares orientiert angeordnet sind, dass ein erstes Elementsegment (21a) eine erste Kraftkomponente (+Fx, +Fy, +Fz) des Paares aufnimmt; und dass ein zweites Elementsegment (21b) eine zweite Kraftkomponente (-Fx, -Fy, -Fz) des Paares aufnimmt; **dadurch gekennzeichnet, dass** die Kraftkomponenten (+Fx, -Fx; +Fy, -Fy; +Fz, -Fz) eines Paares entweder Normalkraftkomponenten (+Fz, -Fz) oder Schubkraftkomponenten (+Fx, -Fx; +Fy, -Fy) sind; dass die Elementsegmente (21a, 21b) in einer Ebene senkrecht zur Wirkachse der Normalkraftkomponenten (+Fz, - Fz) oder in einer Ebene der Wirkachse der Schubkraftkomponenten (+Fx, -Fx; +Fy, -Fy) angeordnet sind; und dass die Elementsegmente (21a, 21b) einen Longitudinaleffekt von Normalkraftkomponenten (+Fz, -Fz) eines Paares aufnehmen oder dass die Elementsegmente (21a, 21b) einen Schubeffekt von Schubkraftkomponenten (+Fx, -Fx; +Fy, - Fy) eines Paares aufnehmen.

2. Komponentenaufnehmer (20) nach Anspruch 1, **dadurch gekennzeichnet, dass** das Element (21) aus zwei Elementsegmenten (21a, 21b) besteht, dass die Elementsegmente (21a, 21b) in der Ebene der Wirkachse der Schubkraftkomponenten (+Fx, - Fx; +Fy, -Fy) durch einen Spalt voneinander beabstandet sind.

3. Komponentenaufnehmer (20) nach Anspruch 2, **dadurch gekennzeichnet, dass** das Element (21) zwei Elementseiten hat; dass die Elementsegmente (21a, 21b) scheibenförmig oder ringförmig sind; und dass eine Abnehmerelektrode (22) einseitig an den Elementsegmenten (21a, 21b) angeordnet ist.

4. Komponentenaufnehmer (20) nach Anspruch 1, **dadurch gekennzeichnet, dass** das Element (21) zwei Elementseiten hat; dass eine Abnehmerelektrode (22) aus mehreren Abnehmerelektrodensegmenten (22a, 22b) besteht; dass die Abnehmerelektrodensegmente (22a, 22b) beidseitig an Elementflächen des Elements (21) angeordnet sind; und dass das Element (21) mit seiner Polarisationsrichtung (P) derart zu entgegengesetzten Wirkrichtungen der Kraftkomponenten (+Fx, - Fx, +Fy, -Fy, +Fz, -Fz) eines Paares orientiert angeordnet ist, dass eine erstes Abnehmerelektrodensegment (22a) von einer ersten Kraftkomponente (+Fx, +Fy, +Fz) des Paares erzeugte elektrische Polarisationsladungen abnimmt; und dass ein zweites Abnehmerelektrodensegment (22b) von einer zweiten Kraftkomponente (-Fx, -Fy, -Fz) des Paares erzeugte elektrische Polarisationsladungen abnimmt.

5. Komponentenaufnehmer (20) nach Anspruch 5, **dadurch gekennzeichnet, dass** die Kraftkomponenten (+Fx, -Fx; +Fy, -Fy; +Fz, -Fz) eines Paares entweder Normalkraftkomponenten (+Fz, -Fz) oder Schubkraftkomponenten (+Fx, -Fx; +Fy, -Fy) sind; dass die Abnehmerelektrodensegmente (22a, 22b) in einer Ebene senkrecht zur Wirkachse der Normalkraftkomponenten (+Fz, -Fz) oder in einer Ebene der Wirkachse der Schubkraftkomponenten (+Fx, -Fx; +Fy, -Fy) angeordnet sind; und dass die Abnehmerelektrodensegmente (22a, 22b) elektrische Polarisationsladungen aus einem Longitudinaleffekt von Normalkraftkomponenten (+Fz, -Fz) eines Paares abnehmen oder dass die Abnehmerelektrodensegmente (22a, 22b) elektrische Polarisationsladungen aus einem Schubeffekt von Schubkraftkomponenten (+Fx, -Fx; +Fy, -Fy) eines Paares abnehmen.

6. Komponentenaufnehmer (20) nach Anspruch 5, **dadurch gekennzeichnet, dass** die eine Elektrode (23) aus zwei scheibenförmigen oder ringförmigen Elektrodensegmenten (23a, 23b) besteht; und dass die Elektrodensegmente (23a, 23b) beidseitig an Elementflächen des Elements (21) angeordnet sind.

7. Komponentenaufnehmer (20) nach Anspruch 7, **dadurch gekennzeichnet, dass** die Abnehmerelektrode (23) aus zwei scheibenförmigen oder ringförmigen Abnehmerelektrodensegmenten (22a, 22b) besteht; und dass auf jeder Elementfläche des Elements (21) ein Abnehmerelektrodensegmente (22a, 22b) und ein Elektrodensegmente (22a, 22b) angeordnet sind.

8. Mehrkomponentenaufnehmer (2) zur gleichzeigen Aufnahme von mehreren Komponenten von Kräften und Momenten, wobei Komponentenaufnehmer (20) mit Elementen (21, 21a, 21b) aus piezoelektrischem Kristallmaterial zu einer Gruppe (200) übereinander gestapelt angeordnet sind, **gekennzeichnet durch** Komponentenaufnehmer (20) zur Aufnahme einer Momentenkomponente (Mx, My, Mz) nach einem der Ansprüche 1 bis 3.

9. Mehrkomponentenaufnehmer (2) nach Anspruch 8, **dadurch gekennzeichnet, dass** jeweils zwei Lagen mit Elementsegmenten (21a, 21b) elektrisch zu einem Elementsegmentpaar parallel geschaltet sind; dass eine Abnehmerelektrode (22) zwischen Elementflächen des Elementsegmentpaares angeordnet ist; und dass die Abnehmerelektrode (22) ein Ausgangssignal liefert.

10. Mehrkomponentenaufnehmer (2) nach Anspruch 8, **dadurch gekennzeichnet, dass** pro Elementsegmentpaar und pro Lage zwei scheibenförmige oder ringförmige Elementsegmente (21a, 21b) durch einen Spalt voneinander beabstandet sind; dass beim Paar für die Aufnahme der Momentenkomponente (Mx) ein Spalt zwischen Stossflächen von zwei Elementsegmenten (21a, 21b) in beiden Lagen parallel zur X-Wirkachse der Momentenkomponente (Mx) orientiert angeordnet ist; dass beim Paar für die Aufnahme der Momentenkomponente (My) ein Spalt zwischen Stossflächen von zwei Elementsegmenten (21a, 21b) in beiden Lagen parallel zur Y-Wirkachse der Momentenkomponente (My) orientiert angeordnet ist; und dass beim Paar für die Aufnahme der Momentenkomponente (Mz) ein Spalt zwischen Stossflächen von zwei Elementsegmenten (21a, 21b) in einer Lage parallel zur X-Wirkachse eines ersten Paares Kraftkomponenten (+Fx und -Fx) der Momentenkomponente (Mz) und in einer anderen Lage parallel zur Y-Wirkachse eines zweiten Paares Kraftkomponenten (+Fy und -Fy) der Momentenkomponente (Mz) orientiert angeordnet ist.

11. Mehrkomponentenaufnehmer (2) nach Anspruch 8, **dadurch gekennzeichnet, dass** ein Komponentenaufnehmer (20) zur Aufnahme einer Kraftkomponente (Fx, Fy, Fz) ein Element (21) aus piezoelektrischem Kristallmaterial aufweist; dass das Element (21) Elementflächen aufweist, dass die Kraftkomponente (Fx, Fy, Fz) elektrische Polarisationsladungen auf den Elementflächen erzeugt; dass die Kraftkomponente (Fx, Fy, Fz) entweder eine Normalkraftkomponente (Fz) oder eine Schubkraftkomponente (Fx, Fy) ist; dass das Element (21) in einer Ebene senkrecht zur Wirkachse der Normalkraftkomponente (Fz) oder in einer Ebene der Wirkachse der Schubkraftkomponente (Fx, Fy) angeordnet ist; und dass das Element (21) einen Longitudinaleffekt der Normalkraftkomponente (Fz) aufnimmt oder dass das Element (21) einen Schubeffekt der Schubkraftkomponente (Fx, Fy) aufnimmt.

12. Mehrkomponentenaufnehmer (2) nach Anspruch 11, **dadurch gekennzeichnet, dass** jeweils zwei Lagen mit Elementen (21) elektrisch zu einem Paar parallel geschaltet sind; dass eine Abnehmerelektrode (22) zwischen gleich polarisierten Elementflächen des Paares angeordnet ist; und dass die Abnehmerelektrode (22) ein Ausgangssignal liefert.

13. Mehrkomponentenaufnehmer (2) nach Anspruch 11, **dadurch gekennzeichnet, dass** drei Komponentenaufnehmer (20) jeweils eine Kraftkomponente (Fx, Fy, Fz) direkt aufnehmen; und dass drei Komponentenaufnehmer (20) jeweils eine Momentenkomponente (Mx, My, Mz) direkt aufnehmen.

14. Mehrkomponentenaufnehmer (2) nach einem der Ansprüche 11 bis 13, **dadurch gekennzeichnet, dass** das Elementsegment (21a, 21b) ein Ringelement (24) aufweist; dass das Ringelement (24) aussenseitig an einer Mantelfläche eines Elementsegments (21a, 21b) angebracht ist; dass das Ringelement (24) Halterungen (27) aufweist; und dass die Halterungen (27) das Elementsegment (21a, 21b) an einem Gehäuse (10) des Mehrkomponentenaufnehmers (2) mechanisch halten.

15. Mehrkomponentenaufnehmer (2) nach einem der Ansprüche 11 bis 14, **dadurch gekennzeichnet, dass** das Element (21) ein Ringelement (24) aufweist; und dass das Elementsegment (21a, 21b) ein Ringelement (24) aufweist; dass das Ringelement (24) aussenseitig an einer Mantelfläche des Elements (21) und des Elementsegments (21a, 21b) angebracht ist; dass das Ringelement (24) Ösen (25) aufweist; und dass das Element (21) und das Elementsegment (21a, 21b) über die Ösen (25) an einem Gehäuse (10) des Mehrkomponentenaufnehmers (2) mechanisch befestigt oder mechanisch zentriert befestigt sind.

16. Anwendung eines Mehrkomponentenaufnehmers (2) nach einem der Ansprüche 8 bis 15, **dadurch gekennzeichnet, dass** der Mehrkomponentenaufnehmer (2) zwischen Montageplatten (31, 31') angeordnet ist; und dass die Montageplatten (31, 31') ein Gehäuse (10) des Mehrkomponentenaufnehmers (2) mechanisch mit einer Maschinenstruktur verbinden.

## Claims

1. A component transducer (20) for sensing a torque component (Mx, My, Mz); with an element (21) made of piezoelectric crystal material comprises element surfaces, which element (21) comprises element surfaces; wherein a force component (Fx, Fy, Fz) generates electric polarization charges on said element surfaces; wherein the torque component (Mx, My, Mz) to be sensed consists of at least one pair having force components (+Fx, -Fx; +Fy, -Fy; +Fz, -Fz), said components (+Fx, -Fx; +Fy, -Fy; +Fz, -Fz) of a pair having a same axis of action and opposite directions of action; wherein the element (21) senses said force components (+Fx, -Fx; +Fy, -Fy; +Fz, -Fz) of a pair separately; wherein the element (21) consists of element segments (21a, 21b); wherein said element segments (21a, 21b) are arranged with opposite directions of polarization (P) to opposite directions of action of said force components (+Fx, -Fx; +Fy, -Fy; +Fz, -Fz) of a pair so that a first element segment (21a) senses a first force component (+Fx, +Fy, +Fz) of the pair; and a second element segment (21b) senses a second force component (-Fx, -Fy, -Fz) of the pair; **characterized in that** the force components (+Fx, -Fx; +Fy, -Fy; +Fz, -Fz) of a pair either are normal force components (+Fz, -Fz) or shear force components (+Fx, -Fx; +Fy, -Fy); wherein the element segments (21a, 21b) are arranged in a plane perpendicular to the axis of action of said normal force components (+Fz, -Fz) or in a plane of the axis of action of the shear force components (+Fx, -Fx; +Fy, - Fy); and wherein the element segments (21a, 21b) sense a longitudinal effect of normal force components (+Fz, -Fz) of a pair, or the element segments (21a, 21b) sense a shear effect of shear force components (+Fx, -Fx; +Fy, -Fy) of a pair.

2. The component transducer (20) according to claim 1, **characterized in that** the element (21) consists of two element segments (21a, 21b); wherein said element segments (21a, 21b) are spaced apart from each other in the plane of the axis of action of the shear force components (+Fx, -Fx; +Fy, -Fy) by a gap.

3. The component transducer (20) according to claim 2, **characterized in that** the element (21) has two element faces; wherein the element segments (21a, 21b) are disc-shaped or ring-shaped; and a sensing electrode (22) is arranged on one face of the element segments (21a, 21b).

4. The component transducer (20) according to claim 1, **characterized in that** the element (21) has two element faces; wherein a sensing electrode (22) consists of multiple sensing electrode segments (22a, 22b); said sensing electrode segments (22a, 22b) being arranged on both faces at element surfaces of the element (21); and wherein the element (21) is arranged with its direction of polarization (P) to opposite directions of action of force components (+Fx, -Fx; +Fy, -Fy; +Fz, -Fz) of a pair in such an orientation that a first sensing electrode segment (22a) receives electric polarization charges generated by a first force component (+Fx, +Fy, +Fz) of the pair; and a second sensing electrode segment (22b) receives electric polarization charges generated by a second force component (-Fx, -Fy, -Fz) of the pair.

5. The component transducer (20) according to claim 4, **characterized in that** the force components (+Fx, -Fx; +Fy, - Fy; +Fz, -Fz) of a pair either are normal force components (+Fz, -Fz) or shear force components (+Fx, -Fx; +Fy, -Fy); wherein the sensing electrode segments (22a, 22b) are arranged in a plane perpendicular to the axis of action of the normal force components (+Fz, -Fz) or in a plane of the axis of action of the shear force components (+Fx, -Fx; +Fy, -Fy); and wherein the sensing electrode segments (22a, 22b) receive electric polarization charges of a longitudinal effect of normal force components (+Fz, -Fz) of a pair; or the sensing electrode segments (22a, 22 b) receive electric polarization charges of a shear effect of shear force components (+Fx, -Fx; +Fy, -Fy) of a pair.

6. The component transducer (20) according to claim 5, **characterized in that** an electrode (23) consists of two disc-shaped or ring-shaped electrode segments (23a, 23b); and said electrode segments (23a, 23b) are arranged on both faces at element surfaces of the element (21).

7. The component transducer (20) according to claim 6, **characterized in that** the sensing electrode (23) consists of two disc-shaped or ring-shaped sensing electrode segments (22a, 22b); and on each element surface of the element (21) are arranged a sensing electrode segments (22a, 22b) and an electrode segments (22a, 22b).

8. A multi-component transducer (2) for simultaneously sensing more that one component of forces and torques, wherein component transducers (20) with elements (21, 21a, 21b) made of piezoelectric crystal material are stacked on top of each other to form a group (200) **characterized by** component transducers (20) for sensing a torque component (Mx, My, Mz) according to any of claims 1 to 3.

9. The multi-component transducer (2) according to claim 8, **characterized in that** two layers comprising element segments (21a, 21b) each are electrically connected in parallel to a pair of element segments; wherein a sensing electrode (22) is arranged between element surfaces of the pair of element segments; and said sensing electrode (22) supplies an output signal.

10. The multi-component transducer (2) according to claim 8, **characterized in that** per pair of element segments and per layer two disc-shaped or ring-shaped element segments (21a, 21b) are spaced apart from each other by a gap; wherein for the pair for sensing the torque component (Mx) a gap between abutting surfaces of two element segments (21a, 21b) is arranged in both layers in an orientation parallel to the X axis of action of said torque component (Mx); for the pair for sensing the torque component (My) a gap between abutting surfaces of two element segments (21a, 21b) is arranged in both layers in an orientation parallel to the Y axis of action of the torque component (My); and for the pair for sensing the torque component (Mz) a gap between abutting surfaces of two element segments (21a, 21b) is arranged in one layer in an orientation parallel to the X axis of action of a first pair of force components (+Fx and -Fx) of the torque component (Mz) and in another layer parallel to the Y axis of action of a second pair of force components (+Fy and -Fy) of the torque component (Mz).

11. The multi-component transducer (2) according to claim 8, **characterized in that** a component transducer (20) for sensing a force component (Fx, -Fy, -Fz) comprises an element (21) made of piezoelectric crystal material; said element (21) comprising element surfaces, wherein said component (Fx, -Fy, -Fz) produces electric polarization charges on the element surfaces; the force component (Fx, Fy, Fz) either is a normal force component (Fz) or a shear force component (Fx, Fy); wherein said element (21) is arranged in a plane perpendicular to the axis of action of the normal force component (Fz) or in a plane of the axis of action of the shear force component (Fx, Fy); and wherein said element (21) senses a longitudinal effect of the normal force component (Fz), or said element (21) senses a shear effect of the shear force component (Fx, Fy) .

12. The multi-component transducer (2) according to claim 11, **characterized in that** two layers of elements (21) each are electrically connected in parallel to a pair; wherein a sensing electrode (22) is arranged between element surfaces of the pair having the same polarization; and said sensing electrode (22) supplies an output signal.

13. The multi-component transducer (2) according to claim 11, **characterized in that** three component transducers (20) each directly sense a force component (Fx, Fy, Fz); and three component transducers (20) each directly sense a torque component (Mx, My, Mz).

14. The multi-component transducer (2) according to any of claims 11 to 13, **characterized in that** the element segment (21a, 21b) comprises an annular element (24); said annular element (24) being attached on the outside of a mantle surface of an element segment (21a, 21b); wherein said annular element (24) comprises mounting brackets (27); and wherein said mounting brackets (27) mechanically support said element segment (21a, 21b) on a housing (10) of the multi-component transducer (2).

15. The multi-component transducer (2) according to any of claims 8 to 15, **characterized in that** the element (21) comprises an annular element (24); and wherein the element segment (21a, 21b) comprises an annular element (24); said annular element (24) being attached on the outside of a mantle surface of the element (21) and the element segment (21a, 21b); wherein said annular element (24) comprises eyelets (25); and wherein said element (21) and said element segment (21a, 21b) are mechanically fastened or fastened in a mechanically centered manner to a housing (10) of the multi-component transducer (2) via the eyelets (25).

16. A use of a multi-component transducer (2) according to any of claims 10 to 17, **characterized in that** the multi-component transducer (2) is arranged between mounting plates (31, 31'); and said mounting plates (31, 31') mechanically connect a housing (10) of the multi-component transducer (2) to a machine structure.

## Revendications

1. Capteur de composante (20) pour détecter une composante de couple (Mx, My, Mz) comprenant un élément (21) fabriqué en matériau cristallin piézoélectrique; dans lequel ledit élément (21) comprend des surfaces d'élément, une composante de force (Fx, Fy, Fz) génère des charges de polarisation électrique sur lesdites surfaces d'élément; la composante de couple (Mx, My, Mz) à détecter est constituée d'au moins une paire aves des composantes de force (+Fx, -Fx; +Fy, -Fy; +Fz, -Fz); lesdites composantes de force (+Fx, -Fx; +Fy, -Fy; +Fz, -Fz) d'une paire ayant le même axe d'action et des sens d'action opposés; dans lequel l'élément (21) reçoit séparément les composantes de force (+Fx, -Fx; +Fy, -Fy; +Fz, -Fz) d'une paire; l'élément (21) est constitué de segments d'élément (21a, 21b); et dans lequel lesdits segments d'élément (21a, 21b) sont disposés avec la direction de polarisation (P) opposée aux sens d'action opposés des composantes de force (+Fx, -Fx; +Fy, -Fy; +Fz, -Fz) d'une paire de manière qu'un premier segment d'élément (21a) reçoit une première composante de force (+Fx, +Fy, +Fz) et un deuxième segment d'élément (21b) reçoit une deuxième composante de force (-Fx, -Fy, -Fz) de ladite paire; **caractérisé en ce que** les composantes de force (+Fx, -Fx; +Fy, -Fy; +Fz, -Fz) d'une paire sont soit des composantes de force normales (+Fz, -Fz) soit des composantes de force de cisaillement (+Fx, -Fx ; +Fy, -Fy); les segments d'élément (21a, 21b) sont disposés dans un plan perpendiculaire à l'axe d'action desdites composantes de force normales (+Fz, -Fz) ou dans un plan de l'axe d'action des composantes de force de cisaillement (+Fx, -Fx; +Fy, -Fy); et **en ce que** les segments d'élément (21a, 21b) détectent un effet longitudinal des composantes de force normales (+Fz, -Fz) d'une paire ou les segments d'élément (21a, 21b) détectent un effet de cisaillement des composantes de force de cisaillement (+Fx , -Fx; -Fy, -Fy) d'une paire.

2. Capteur de composante (20) selon la revendication 1, **caractérisé en ce que** l'élément (21) est constitué de deux segments d'élément (21a, 21b), lesdits segments d'élément (21a, 21b) étant espacés l'un de l'autre par un espace dans le plan de l'axe d'action des composantes de force de cisaillement (+Fx, -Fx; +Fy, -Fy).

3. Capteur de composante (20) selon la revendication 2, **caractérisé en ce que** l'élément (21) comporte deux surfaces d'élément; les segments d'élément (21a, 21b) sont en forme de disque ou en forme d'anneau, et **en ce qu'**une électrode de détection (22) est disposée sur un côté des segments d'élément (21a, 21b).

4. Capteur de composante (20) selon la revendication 1, **caractérisé en ce que** l'élément (21) comporte deux surfaces d'élément; une électrode de détection (22) se compose d'une pluralité de segments d'électrode de détection (22a, 22b); lesdits segments d'électrode de détection (22a, 22b) sont disposés des deux côtés au niveau des surfaces d'élément de l'élément (21); et **en ce que** l'élément (21) est disposé avec sa direction de polarisation (P) vers des sens d'action opposées des composantes de force (+Fx, -Fx, +Fy, -Fy, +Fz, -Fz) d'une paire de manière qu'un premier segment d'électrode de détection (22a) reçoit des charges de polarisation électrique générées par une première composante de force (+Fx, +Fy, +Fz) de la paire et un second segment d'électrode de détection (22b) reçoit des charges de polarisation électrique générées par une deuxième composante de force (- Fx, -Fy, -Fz) de la paire.

5. Capteur de composante (20) selon la revendication 5, **caractérisé en ce que** les composantes de force (+Fx, -Fx; +Fy, -Fy; +Fz, -Fz) d'une paire sont soit des composantes de force normales (+Fz, -Fz) soit des composantes de force de cisaillement (+Fx, -Fx; +Fy, -Fy) ; **en ce que** les segments d'électrode de détection (22a, 22b) sont disposés dans un plan perpendiculaire à l'axe d'action desdites composantes de force normales (+Fz, -Fz) ou dans un plan de l'axe d'action des composantes de force de cisaillement (+Fx , -Fx; +Fy, -Fy); et **en ce que** les segments d'électrode de détection (22a, 22b) reçoivent des charges de polarisation électrique générées par un effet longitudinal des composantes de force normales (+Fz, -Fz) d'une paire ou les segments d'électrode de détection (22a, 22b) reçoivent des charges de polarisation électrique générées par un effet de cisaillement des composantes de force de cisaillement (+Fx, -Fx; -Fy, -Fy) d'une paire.

6. Capteur de composante (20) selon la revendication 5, **caractérisé en ce que** la première électrode (23) est constituée de deux segments d'électrode (23a, 23b) en forme de disque ou en forme d'anneau; et **en ce que** les segments d'électrode (23a, 23b) sont disposés des deux côtés au niveau des surfaces d'élément de l'élément (21).

7. Capteur de composante (20) selon la revendication 7, **caractérisé en ce que** l'électrode de détection (23) est constituée de deux segments d'électrode de détection (23a, 23b) en forme de disque ou en forme d'anneau; et **en ce que** sur chaque surface d'élément de l'élément (21) sont disposés un segment d'électrode de détection (22a, 22b) et un segment d'électrode (22a, 22b).

8. Capteur de plusieurs composantes (2) pour détecter simultanément plusieurs composantes des forces et des couples, dans lequel des capteurs de composante (20) comprenant des éléments (21, 21a, 21b) en matériau cristallin piézoélectrique sont empilés les uns sur les autres formant un groupe (200) **caractérisé par** des capteurs de composante (20) pour détecter une composante de couple (Mx, My, Mz) selon l'une quelconque des revendications 1 à 3.

9. Capteur de plusieurs composantes (2) selon la revendication 8, **caractérisé en ce que** deux couches comprenant des segments d'élément (21a, 21b) sont respectivement reliées électriquement en parallèle pour former une paire de segments d'élément; une électrode de détection (22) est disposée entre les surfaces d'élément de la paire de segments d'élément; et **en ce que** ladite électrode de détection (22) fournit un signal de sortie.

10. Capteur de plusieurs composantes (2) selon la revendication 8, **caractérisé en ce que** deux segments d'élément (21a, 21b) en forme de disque ou en forme d'anneau par paire de segments d'élément et par couche sont espacés l'un de l'autre par un espace; pour la paire détectant la composante de couple (Mx) un espace est prévu entre les surfaces de butée de deux segments d'élément (21a, 21b) dans les deux couches dans une orientation parallèle à l'axe d'action X de ladite composante de couple (Mx); pour la paire détectant la composante de couple (My) un espace est prévu entre les surfaces de butée de deux segments d'élément (21a, 21b) dans les deux couches dans une orientation parallèle à l'axe d'action Y de la composante de couple (My); et pour la paire détectant la composante de couple (Mz) un espace est prévu entre les surfaces de butée de deux segments d'élément (21a, 21b) dans une couche dans une orientation parallèle à l'axe d'action X d'une première paire de composantes de force (+Fx et -Fx) de la composante de couple (Mz) et dans une autre couche dans une orientation parallèle à l'axe d'action Y d'une deuxième paire de composantes de force (+Fy et -Fy) de la composante de couple (Mz).

11. Capteur de plusieurs composantes (2) selon la revendication 8, **caractérisé en ce qu'**un capteur de composante (20) pour détecter une composante de force (Fx, Fy, Fz) comprend un élément (21) en matériau cristallin piézoélectrique; ledit élément (21) comprenant des surfaces d'élément, dans lequel la composante de force (Fx, Fy, Fz) génère des charges de polarisation électrique sur les surfaces d'élément; la composante de force (Fx, Fy, Fz) est soit une composante de force normale (Fz) soit une composante de force de cisaillement (Fx, Fy); ledit élément (21) est disposé dans un plan perpendiculaire à l'axe d'action de la composante de force normale (Fz) ou dans un plan de l'axe d'action de la composante de force de cisaillement (Fx, Fy); et **en ce que** ledit élément (21) détecte un effet longitudinal de la composante de force normale (Fz), ou ledit élément (21) détecte un effet de cisaillement de la composante de force de cisaillement (Fx, Fy).

12. Capteur de plusieurs composantes (2) selon la revendication 11, **caractérisé en ce que** deux couches comprenant des éléments (21) sont respectivement connectées électriquement en parallèle pour former une paire; une électrode de détection (22) est disposée entre les surfaces d'élément de la paire ayant la même polarisation; et **en ce que** ladite électrode de détection (22) fournit un signal de sortie.

13. Capteur de plusieurs composantes (2) selon la revendication 11, **caractérisé en ce que** trois capteurs de composante (20) détectent chacun directement une composante de force (Fx, Fy, Fz); et trois capteurs de composante (20) détectent chacun directement une composante de couple (Mx, My, Mz).

14. Capteur de plusieurs composantes (2) selon l'une quelconque des revendications 11 à 13, **caractérisé en ce que** le segment d'élément (21a, 21b) comprend un élément annulaire (24); ledit élément annulaire (24) étant fixé à l'extérieur d'une surface latérale d'un segment d'élément (21a, 21b); ledit élément annulaire (24) comprend des supports de montage (27); et **en ce que** lesdits supports de montage (27) supportent mécaniquement ledit segment d'élément (21a, 21b) sur un boîtier (10) du capteur de plusieurs composantes (2).

15. Capteur de plusieurs composantes (2) selon l'une quelconque des revendications 11 à 14, **caractérisé en ce que** l'élément (21) comprend un élément annulaire (24); et **en ce que** le segment d'élément (21a, 21b) comprend un élément annulaire (24); ledit élément annulaire (24) étant fixé à l'extérieur d'une surface latérale de l'élément (21) et du segment d'élément (21a, 21b); ledit élément annulaire (24) comprend des œillets (25); et **en ce que** ledit élément (21) et ledit segment d'élément (21a, 21b) sont fixés mécaniquement ou fixés de manière mécaniquement centrée à un boîtier (10) du capteur de plusieurs composantes (2) au moyen des œillets (25).

16. Utilisation d'un capteur de plusieurs composantes (2) selon l'une quelconque des revendications 8 à 15, **caractérisée en ce que** ledit capteur de plusieurs composantes (2) est placé entre des plaques de montage (31, 31'); et **en ce que** lesdites plaques de montage (31, 31') relient mécaniquement un boîtier (10) du capteur de plusieurs composantes (2) à une structure de machine.
